# EUROPEAN PATENT APPLICATION

(11) **EP 4 848 398 A1**
(43) Date of publication of application: **02.12.2026**
(21) Application number: 24926666.9
(22) Date of filing: 22.08.2024
(51) Int. Cl.: H01M 10/058, H01M 50/533

(54) **TAB FLATTENING DEVICE, TAB FLATTENING CONTROL METHOD, AND BATTERY PRODUCTION SYSTEM**

(30) Priority: 01.03.2024 CN 202410233484
(71) Applicant: Contemporary Amperex Technology Co., Limited, Ningde, Fujian 352100 (CN)
(72) Inventor: WU, Xuebing, Ningde, Fujian 352100 (CN); QING, Yalong, Ningde, Fujian 352100 (CN); PAN, Feng, Ningde, Fujian 352100 (CN); TANG, Zhuolin, Ningde, Fujian 352100 (CN)
(74) Representative: Aera A/S
(86) International application number: PCT/CN2024/113946
(87) International publication number: WO 2025/179799

(57) **Abstract**

A tab flattening device, comprising a driving member and tab flattening structures (200). Each tab flattening structure (200) comprises a mounting body (210), a flattening head (220), and edge restraint members (230). The flattening head (220) is rotatably arranged on the mounting body (210) and protrudes from one side of the mounting body (210). The outer surface of the flattening head (220) forms a flattening surface (221) capable of coming into contact with surfaces (252) of tabs. The edge restraint members (230) are arranged on the periphery of the flattening head (220), and protrude from one side of the mounting body (210) and form restraint surfaces (231) capable of coming into contact with edge end portions (251) of the tabs (25). While flattening the tabs (25), the edge end portions (251) of the tabs (25) can be restrained, so that the flattened tabs (25) are confined within a safe range, thereby reducing the likelihood of burrs of the tabs (25) coming into contact with other parts of a battery (100), and thus improving the reliability of the battery (100).

## Description

### CROSS-REFERENCE TO RELATED APPLICATIONS

The present application claims priority to Chinese Patent Application No. 2024102334848, filed on March 1, 2024 and entitled "TAB FLATTENING APPARATUS, TAB FLATTENING CONTROL METHOD, AND BATTERY PRODUCTION SYSTEM", which is incorporated herein by reference in its entirety.

### TECHNICAL FIELD

The present application relates to the technical field of battery processing, and in particular, to a tab flattening apparatus, a tab flattening control method, and a battery production system.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technologies are an important factor related to the development of the electric vehicles.

Flattening is a key process in the manufacturing process of full-tab batteries. In the related art, a tab flattening structure is generally used to perform flattening treatment on the tabs at the end of the electrode assembly. However, this easily causes risks such as corrosion and electrolyte leakage of the electrode assembly of the battery that reduce reliability.

### SUMMARY

Based on this, it is necessary to provide a tab flattening apparatus that improves the reliability of a battery while flattening tabs.

According to a first aspect, the present application provides a tab flattening apparatus, including: a driving member; and a tab flattening structure, driven by the driving member and rotating circumferentially or spirally around an axis direction of the electrode assembly, and including: a mounting main body, a flattening head, and an edge restraining member. The flattening head is arranged on the mounting main body and protrudes from one side of the mounting main body. An outer surface of the flattening head forms a flattening surface capable of contacting the surface of the tab. The edge restraining member is arranged on an outer periphery of the flattening head, protrudes from one side of the mounting main body, and forms a restraint surface capable of contacting an edge end portion of the tab.

In the technical solution of the embodiments of the present application, the edge end portion of the tab can be restrained while flattening the tab, and the flattened tab is limited within a safe range, which reduces the possibility of flashed burrs of the tab coming into electrical contact with other parts of a battery, thereby improving the reliability of the battery.

In some embodiments, the mounting main body has a mounting surface. Both the flattening head and the edge restraining member protrude relative to the mounting surface. The tab flattening structure further includes an adjustment member. The adjustment member is connected to the edge restraining member and is configured to adjust a protruding distance of the edge restraining member relative to the mounting surface.

In the technical solution of the embodiments of the present application, the limiting position of the restraint surface can be changed through the adjustment member to adapt to various different situations.

In some embodiments, the mounting main body has a mounting hole communicating with the mounting surface. The adjustment member includes a connecting portion and an adjustment portion. The connecting portion is passed through the mounting hole and is connected to the edge restraining member on one side of the mounting surface. The adjustment portion is provided on a side of the connecting portion away from the edge restraining member. The adjustment portion is configured to adjust the axial position of the connecting portion within the mounting hole.

In the technical solution of the embodiments of the present application, the mounting hole may penetrate the mounting main body along an extending direction of the flattening head. In this case, the axis direction of the mounting hole is perpendicular to the mounting surface. The connecting portion may be a columnar structure passed through the mounting hole and adjusted by the adjustment portion to change a protruding distance of the edge restraining member relative to the mounting surface.

In some embodiments, the tab flattening structure further includes an elastic member. The elastic member is provided on the connecting portion, and one end is connected to the edge restraining member. The elastic member is capable of applying a pressing restraint force through the edge restraining member.

In the technical solution of the embodiments of the present application, the elastic member is capable of applying an elastic restraint force to the tab through the edge restraining member, thereby alleviating the phenomenon of material detachment and lithium precipitation of the electrode assembly caused by excessive rigid pressure.

In some embodiments, the connecting portion includes a first connecting section and a second connecting section that are connected to each other. The other end of the first connecting section is connected to the edge restraining member. One end of the second connecting section partially extends out of the mounting hole. The adjustment portion is detachably sleeved on a portion of the second connecting section that extends out of the mounting hole and is capable of abutting against a side of the mounting main body facing away from the mounting surface. The elastic member is sleeved on an outer periphery of the second connecting section, and two ends respectively abut against the first connecting section and the inner wall of the mounting hole.

In the technical solution of the embodiments of the present application, when the connecting portion is installed in the mounting hole, since an outer diameter of the second connecting section is relatively small, when the first connecting section abuts against the hole wall of the mounting hole, a gap exists between the second connecting section and the hole wall of the mounting hole. The elastic member is sleeved on the second connecting section and located in the gap, with one end connected to a step surface of the first connecting section and the other end abutting against an inner wall of the mounting hole facing the step surface, so that the elastic member generates an elastic restraint force along an axis of the mounting hole.

In some embodiments, the adjustment portion is sleeved on the second connecting section and is threadedly and detachably connected to the second connecting section.

In the technical solution of the embodiments of the present application, the threaded connection conveniently achieves the position adjustment of the connecting portion within the mounting hole of the mounting main body.

In some embodiments, a plurality of edge restraining members are provided, and the plurality of edge restraining members are evenly arranged at intervals along a circumferential direction on an outer periphery of the flattening head.

In the technical solution of the embodiments of the present application, when the flattening head rotates to flatten a plurality of tabs, the plurality of edge restraining members sequentially restrain and shape the edge end portions of the plurality of tabs, thereby achieving a uniform constricting effect.

In some embodiments, the restraint surface is arcuate, and the edge restraining member is rotatable relative to the mounting main body.

In the technical solution of the embodiments of the present application, during the process in which the flattening head flattens the tab, the edge restraining member can rotate relative to the mounting main body, so that the arcuate restraint surface rotates relative to the tab, thereby reducing the risk of generating metal particles on the tab during the flattening process by means of rolling.

In some embodiments, the flattening surface is conical.

In the technical solution of the embodiments of the present application, the edge restraining member is located on one side of the mounting surface and is disposed close to a side of the flattening surface with the largest diameter. A tip of the flattening surface is disposed close to a geometric center of an end surface of the electrode assembly, so that the flattening head completes the flattening of all tabs after one rotation relative to the end surface.

According to a second aspect of the present application, a tab flattening method is further provided, adopting the tab flattening apparatus according to any one of the above items. The method includes the following steps: controlling a tab flattening structure to move toward a side of a tab of an electrode assembly, so that a flattening surface of a flattening head and a restraint surface of an edge restraining member respectively abut against a surface and an edge end portion of the tab; and controlling the tab flattening structure to rotate circumferentially or spirally around an axis direction of the electrode assembly.

With such a design, the edge end portion of the tab can be restrained while the tab is flattened, and the flattened tab is limited within a safe range, which reduces the possibility of flashed burrs of the tab coming into electrical contact with other parts of the battery, thereby improving the reliability of the battery.

In some embodiments, the step of controlling the tab flattening structure to rotate circumferentially or spirally around an axis direction of the electrode assembly includes: controlling the tab flattening structure to rotate around the axis direction of the electrode assembly, so that a rotational speed of the tab flattening structure reaches a set rotational speed; and controlling the tab flattening structure to move toward one side of the tab.

With such a design, by reasonably controlling the action of the tab flattening structure, the flattening of the tab becomes more stable and the flattening effect is better.

According to a third aspect of the present application, a battery production system is further provided, where the battery production system includes the tab flattening apparatus according to any one of the above items.

The foregoing description is merely an overview of the technical solution of the present application. For a better understanding of the technical means in the present application such that they can be implemented according to the content of the specification, and to make the above and other objectives, features, and advantages of the present application more obvious and easier to understand, the following describes specific embodiments of the present application.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts.

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the accompanying drawings:
FIG. 1 is a schematic structural diagram of a vehicle according to one or more embodiments of the present application.
FIG. 2 is a schematic structural exploded view of a battery according to one or more embodiments of the present application.
FIG. 3 is a schematic structural exploded view of a battery cell according to one or more embodiments of the present application.
FIG. 4 is a schematic structural exploded view of a tab flattening structure according to one or more embodiments of the present application.
FIG. 5 is a schematic structural cross-sectional view of the tab flattening structure in FIG. 4.
FIG. 6 is a schematic three-dimensional structural diagram of the tab flattening structure in FIG. 4 cooperating with an electrode assembly.
FIG. 7 is a schematic diagram of a planar structure of the tab flattening structure in FIG. 4 cooperating with an electrode assembly.
FIG. 8 is a first flowchart of a tab flattening control method according to one or more embodiments of the present application.
In FIG. 9, (a) to (d) are schematic structural diagrams of different structures of an electrode assembly during a tab flattening process according to one or more embodiments of the present application, respectively.
FIG. 10 is a second flowchart of a tab flattening control method according to one or more embodiments of the present application.

1000. vehicle; 100. battery; 30. controller; 40. motor; 11. box body; 111. first box body portion; 112. second box body portion; 20. battery cell; 21. housing; 22. end cover; 23. electrode assembly; 24. end surface; L. axis; 25. tab; 251. edge end portion; 252. surface of tab; 200. tab flattening structure; 210. mounting main body; 211. mounting surface; 212. mounting hole; 220. flattening head; 221. flattening surface; 230. edge restraining member; 231. restraint surface; 240. adjustment member; 241. connecting portion; 2411. first connecting section; 2412. second connecting section; 242. adjustment portion; 250. elastic member; and 300. fixing fixture.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the descriptions of the embodiments of the present application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of embodiments of the present application, "a plurality of" means at least two unless otherwise specifically stated.

In this specification, reference to "embodiment" means that specific features, structures, or characteristics described with reference to the embodiment may be included in at least one embodiment of the present application. The word "embodiment" appearing in various positions in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of the present application, the term "a plurality of " means more than two (inclusive). Similarly, "a plurality of groups" means more than two (inclusive) groups, and "a plurality of pieces" means more than two (inclusive) pieces.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the description of the embodiments of the present application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of the present application as suitable to specific situations.

Solar cells, as green energy batteries, are finding increasingly widespread applications from the perspective of market development. Solar cells are not only used in photovoltaic power generation systems such as solar power stations, but are also gradually being applied in electrical equipment such as electric vehicles. With continuous expansion of application fields of solar cells, market demands for solar cells are also increasing.

In the production process of cylindrical batteries, an important process is the preparation of tabs. For cylindrical batteries with a full-tab structure, when coating a positive electrode current collector and a negative electrode current collector with a positive active material layer and a negative active material layer, an uncoated foil region is left at the edge of the positive electrode current collector and negative electrode current collector, and the uncoated foil region serves as the tab. Since a foil body at an edge end portion of the tab is thin, the edge end portion of the tab is uneven, which may cause flanging and more burrs. Therefore, when welding with the current collecting plate, a local region of the edge end portion of the tab cannot contact and weld to the current collecting plate, resulting in unstable welding area.

In order to facilitate subsequent current collecting tray welding at the end of the electrode assembly and ensure welding quality, it is necessary to use a tab flattening structure to perform flattening treatment on the tabs of the electrode assembly, the upright tabs at the end of the electrode assembly are flattened into a plane, so that the tabs of each layer are in close contact.

The commonly used shaping method includes mechanical flattening. Mechanical flattening uses mechanical components to rotate and squeeze the tabs to shape the tabs of the battery, so that the tabs are pressed down and lie on the end of the electrode assembly. However, during the process in which the tab flattening structure flattens the tabs, an edge of the tab is prone to flashed burrs and does not lie down on the end of the electrode assembly in a preset direction, causing the edge of the tab to warp upward or insert downward, which may come into electrical contact with the electrode assembly of the battery, leading to risks of corrosion of the battery and electrolyte leakage of the battery that reduce reliability.

Based on this, in order to solve some reliability-reducing problems caused by flashed burrs in the existing tab flattening process, the present application provides a tab flattening apparatus. While providing a flattening surface for mechanical flattening of the tab, an edge restraining member is provided to restrain an edge of the tab, so that after flattening, the tab lies down within a safe range under the restraint of the edge restraining member, thereby improving the reliability of the battery.

The technical solutions described in the embodiments of the present application are all applicable to cylindrical battery cells, and the cylindrical battery cells are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of the present application are not only applicable to the devices described above, but also applicable to all devices using batteries. However, for brevity of description, electric vehicles are used as an example for description in the following embodiments.

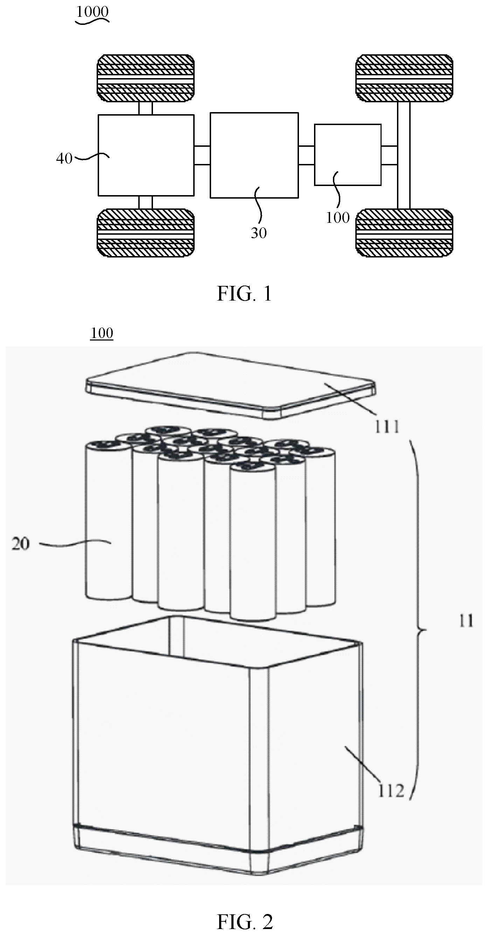

For example, as shown in FIG. 1, FIG. 1 is a schematic structural diagram of a vehicle 1000 according to one embodiment of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 100 may be disposed inside the vehicle 1000, and the controller 30 configured to control the battery 100 to supply power to the motor 40. For example, the battery 100 may be disposed at the bottom, the front, or the rear of the vehicle 1000. The battery 100 may be configured to supply power to the vehicle 1000. For example, the battery 100 may be used as an operational power source for the vehicle 1000 which is configured for a circuit system of the vehicle 1000, for example, to satisfy power needs of start, navigation, and running of the vehicle 1000. In another embodiment of the present application, the battery 100 can be used as not only the operational power supply for the vehicle 1000 but also a driving power supply for the vehicle 1000, replacing all or part of the fossil fuel or the natural gas to provide driving power for the vehicle 1000.

In order to meet different power usage requirements, the battery 100 may include a plurality of battery cells. For example, as shown in FIG. 2, which is a schematic structural diagram of a battery 100 according to one embodiment of the present application. The battery 100 may include a plurality of battery cells 20. The battery 100 may further include a box body 11. An inside of the box body 11 is a hollow structure, and the plurality of battery cells 20 are accommodated in the box body 11. For example, the plurality of battery cells 20 connected in parallel or in series or in parallel and series, and then placed into the box body 11. The box body 11 may include a first box body portion 111 and a second box body portion 112. As long as the battery cells can be accommodated, no specific limitation is made here.

In some embodiments, the battery 100 may further include other structures. Details are not described herein again. For example, the battery 100 may further include a busbar component, and the busbar component is configured to achieve electrical connection between the plurality of battery cells 20, for example, connection in parallel, in series, or in series-parallel. Specifically, the busbar component may achieve electrical connection between the battery cells 20 by connecting the electrode terminals of the battery cells 20. Further, the busbar component can be fixed to the electrode terminals of the battery cells 20 by means of welding. The electric energy of the plurality of battery cells 20 can be further led out through a conductive mechanism passing through the box body. In some embodiments, the conductive mechanism may also belong to the busbar component.

According to different power requirements, the quantity of battery cells 20 can be set to any value. The plurality of battery cells 20 can be connected in series, parallel, or series-parallel to achieve a relatively great capacity or power. Since the quantity of battery cells 20 included in each battery 100 may be large, for ease of installation, the battery cells 20 may be grouped, and each group of battery cells 20 forms a battery module. The quantity of battery cells 20 included in the battery module is not limited and can be set according to requirements. The battery may include a plurality of battery modules, and these battery modules can be connected in series, parallel, or series-parallel.

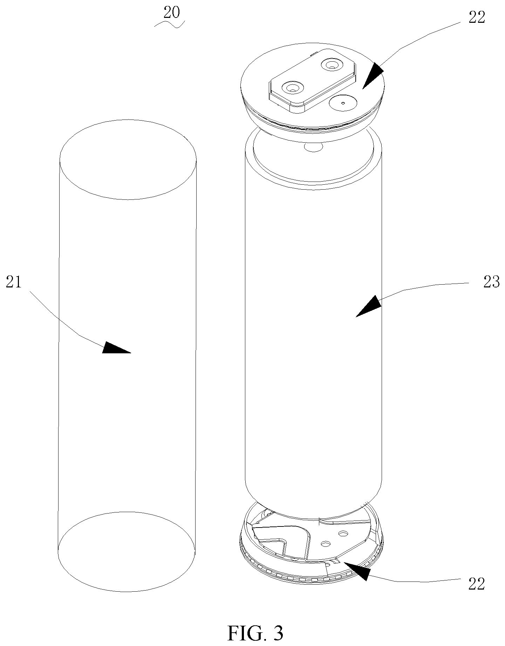

As shown in FIG. 3, it is a schematic structural diagram of a battery cell 20 according to one embodiment of the present application. The battery cell 20 includes a housing 21, an end cover 22, and an electrode assembly 23. The housing 21 and the end cover 22 form a shell or a battery box. The wall of the housing 21 and the wall of the end cover 22 are both referred to as the walls of the battery cell 20. The housing 21 is determined according to the shape of one or more electrode assemblies 23 after combination. For example, the housing 21 may be a hollow cylinder as shown in FIG. 3, or, if the battery cell 20 is a blade battery cell, the housing 21 may be a rectangular parallelepiped with a relatively long length. In addition, at least one surface of the housing 21 has an opening, so that one or more electrode assemblies 23 can be placed inside the housing 21. For example, when the housing 21 is a hollow cylinder, an end surface 24 of the housing 21 is an opening surface, that is, the end surface 24 has no wall body, allowing the interior and exterior of the housing 21 to be communicated with each other. It can be seen from FIG. 3, the cylindrical battery cell has two circular end surfaces 24, and a cylinder is between the two circular end surfaces 24. The cylinder portion may include the electrode assembly 23. The end cover 22 covers the opening and is connected to the housing 21 to form a closed cavity that prevents the electrode assembly 23. The housing 21 is filled with an electrolyte, for example, a liquid electrolyte. In the battery cell 20, according to actual usage requirements, one or more electrode assemblies 23 may be provided. In some embodiments of the present application, as shown in FIG. 3, one electrode assembly 23 is provided inside the battery cell 20.

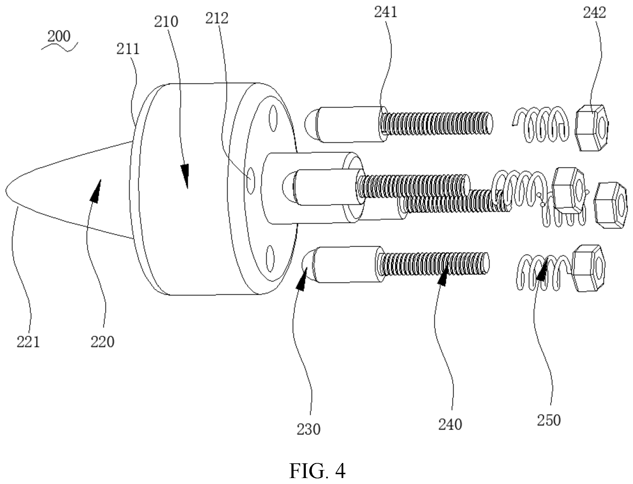

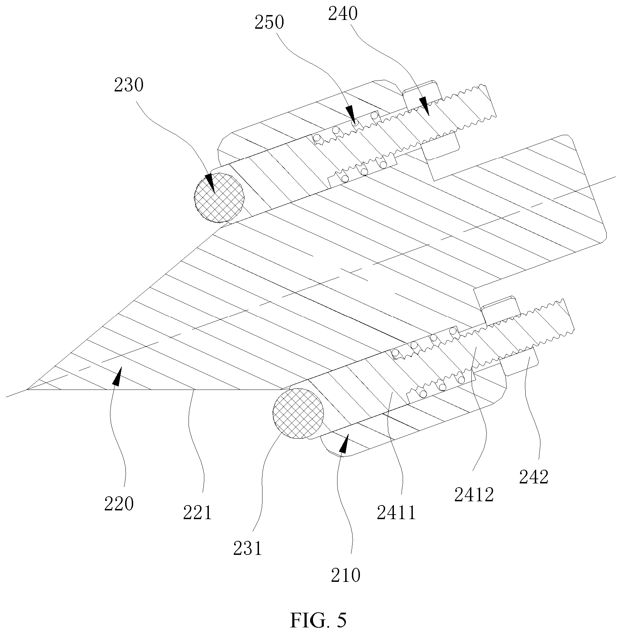

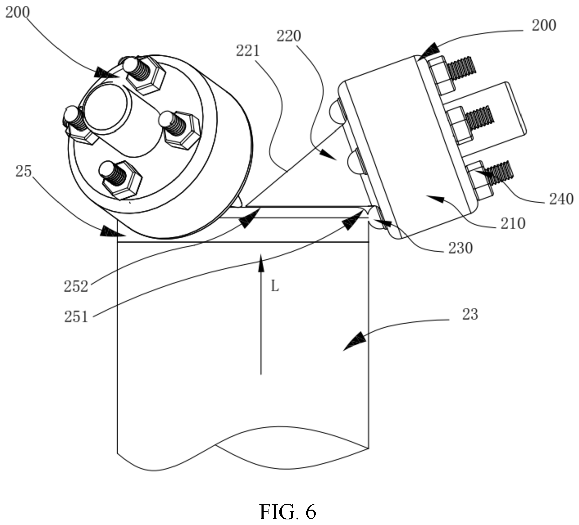

According to some embodiments of the present application, referring to FIG. 4 to FIG. 7, the present application provides a tab flattening apparatus. The tab flattening apparatus includes a driving member and a tab flattening structure 200. The tab flattening structure 200 is driven by the driving member and rotates circumferentially or spirally around an axis L direction of the electrode assembly, and includes: a mounting main body 210, a flattening head 220, and an edge restraining member 230. The flattening head 220 is rotatably arranged on the mounting main body 210 and protrudes from one side of the mounting main body 210. An outer surface of the flattening head 220 forms a flattening surface 221 capable of contacting the surface 252 of the tab. The edge restraining member 230 is arranged on an outer periphery of the flattening head 220, protrudes from one side of the mounting main body 210, and forms a restraint surface 231 capable of contacting an edge end portion 251 of the tab 25.

The mounting main body 210 refers to a base for mounting the flattening head 220, the edge restraining member 230, or other structural components. The flattening head 220 may rotate circumferentially relative to the mounting main body 210, so that the flattening surface 221 on the outer peripheral surface of the flattening head 220 is in contact with the surface 252 of the tab, thereby applying a unidirectional pressure to the tab 25 and flattening the same to a preset tab height. Certainly, the rotation of the flattening head 220 around the axis thereof can also be achieved by the rotation of the mounting main body 210 driving the flattening head 220 to rotate.

The tab height refers to the height at which the tab 25 protrudes from the end surface 24 on the side of the electrode assembly 23 connected to the tab 25 along the axis L of the electrode assembly 23.

It can be understood that when flattening the tab 25 of the cylindrical battery 100, while the flattening head 220 rotates relative to the mounting main body 210, the mounting main body 210 may also drive the flattening head 220 to revolve around the circumference of the cylindrical battery 100, and during the rotation process, the flattening of the plurality of tabs 25 on the end surface 24 is achieved.

Alternatively, when flattening the tab 25 of the cylindrical battery 100, while the flattening head 220 rotates relative to the mounting main body 210, the cylindrical battery 100 may also rotate circumferentially in an opposite direction, and during the rotation process, the flattening of the plurality of tabs 25 on the end surface 24 is achieved.

The flattening head 220 may be cylindrical, conical, or other shapes, and its outer surface forms an arcuate flattening surface 221. While the flattening head 220 rotates circumferentially, the flattening surface 221 rotates and applies unidirectional pressure to the tab 25, thereby pressing down and flattening the tab 25.

The edge restraining member 230 refers to a component that restrains an edge position of the tab 25 during the flattening process of the tab 25, so that all regions where the tabs 25 are located after flattening are inside a motion trajectory of the restraint surface 231. When the edge restraining member 230 protrudes from one side of the mounting surface 211 relative to the mounting main body 210, the restraint surface 231 is located at one edge of the flattening surface 221, so as to continuously restrain the edge end portion 251 of the tab 25 flattened by the flattening surface 221 while the flattening head 220 performs flattening, thereby limiting the edge end portion 251 of the tab 25 within an outer edge range of the end surface 24 of the electrode assembly 23, reducing the risk of the edge of the flattened tab 25 coming into electrical contact with a non-end surface position, thereby improving the reliability of the battery 100. The edge end portion 251 of the tab 25 refers to the tab 25 region closest to the outer edge of the end surface 24 of the electrode assembly 23 after the tab 25 is flattened. Based on the geometric center of the end surface 24, the edge end portion 251 of the tab 25 is the position farthest from the geometric center after the tab 25 is flattened.

As shown in FIG. 2, in an initial state, the flattening head 220 can be directly attached to the end surface 24 of the electrode assembly 23. While the driving member is activated to drive the tab flattening structure 200 to rotate circumferentially, the flattening head 220 on each tab flattening structure 200 rotates circumferentially to flatten the tab 25. In this case, the edge restraining member 230 on each tab flattening structure 200 restrains and limits the edge end portion 251 of the tab 25, reducing the risk of the tab 25 coming into electrical contact with a position outside the end surface 24 of the electrode assembly 23 due to flashed burrs generated by flattening.

In another embodiment, in an initial state, the flattening head 220 is away from the end surface 24 of the electrode assembly 23. The driving member is activated to drive the tab flattening structure 200 to rotate spirally around the axis direction L of the electrode assembly 23 until the tab flattening structure 200 gradually approaches the tab 25 along the axis L to flatten the tab 25.

Specifically, the connection between the driving member and the tab flattening structure 200 may be directly connected to the mounting main body 210, or the end of the flattening head 220 connected to the mounting main body 210 may directly pass through the mounting main body 210 and be connected to the driving member from the end facing away from the mounting surface 211.

In this way, the tab flattening structure 200 of the present application can restrain the edge end portion 251 of the tab 25 while flattening the tab 25, and the flattened tab 25 is limited within a safe range, which reduces the possibility of flashed burrs of the tab coming into electrical contact with other parts of the battery 100, thereby improving the reliability of the battery after the tab 25 is flattened.

In some embodiments, the mounting main body 210 has a mounting surface 211. Both the flattening head 220 and the edge restraining member 230 protrude relative to the mounting surface 211. The tab flattening structure 200 further includes an adjustment member 240. The adjustment member 240 is connected to the edge restraining member 230 and is configured to adjust a protruding distance of the edge restraining member 230 relative to the mounting surface 211.

One side surface of the mounting main body 210 forms a mounting surface 211. The flattening head 220 protrudes relative to the mounting surface 211, and the edge restraining member 230 may also protrude from one side of the mounting surface 211. In this case, both the flattening action of the flattening head 220 and the restraining edge action of the edge restraining member 230 are completed from the side facing the mounting surface 211.

The adjustment member 240 can adjust the protruding distance of the edge restraining member 230 relative to the mounting surface 211, thereby changing the extent to which the edge restraining member 230 extends relative to the mounting surface 211, so as to adjust the limiting position of the restraint surface 231.

For example, when the size of the tab 25 of the electrode assembly 23 is relatively small, or the size of the end surface 24 of the electrode assembly 23 becomes smaller, the distance by which the edge restraining member 230 extends out of the mounting surface 211 can be increased. In this case, the restraint surface 231 is relatively inward relative to the outer edge of the end surface 24 and is closer to the geometric center of the end surface 24, and the area of the tab 25 that can be flattened by the flattening surface 221 is reduced. The opposite is also true, and details are not described herein.

In this way, the tab flattening structure 200 provided by the present application can change the limiting position of the restraint surface 231 through the adjustment member 240 to adapt to various different situations.

It can be understood that during the entire flattening process of the tabs 25, the motion trajectory of the restraint surface 231 is located within the outer edge range of the end surface 24 and is located outside the edge end portions 251 of all tabs 25 flattened by the flattening surface 221.

In some embodiments, the mounting main body 210 has a mounting hole 212 communicating with the mounting surface 211. The adjustment member 240 includes a connecting portion 241 and an adjustment portion 242. The connecting portion 241 is passed through the mounting hole 212 and is connected to the edge restraining member 230 on one side of the mounting surface 211. The adjustment portion 242 is provided on the side of the connecting portion 241 away from the edge restraining member 230. The adjustment portion 242 is configured to adjust the axial position of the connecting portion 241 within the mounting hole 212.

The connecting portion 241 is passed through the mounting hole 212 and forms a first connecting end close to the mounting surface 211 and a second connecting end away from the mounting surface 211 along the axis direction of the mounting hole 212. The edge restraining member 230 is provided at the first connecting end, and the adjustment member 240 is provided at the second connecting end. The adjustment member 240 can adjust an axial position of the connecting portion 241 within the mounting hole 212, so that the second connecting end drives the edge restraining member 230 to pass out of the mounting hole 212 and protrude relative to the mounting surface 211. The axial position of the connecting portion 241 within the mounting hole 212 refers to a position of the connecting portion 241 along the axial direction within the mounting hole 212.

The mounting hole 212 may penetrate the mounting main body 210 along an extending direction of the flattening head 220. In this case, the axis direction of the mounting hole 212 is perpendicular to the mounting surface 211. The connecting portion 241 may be a columnar structure passed through the mounting hole 212 and adjusted by the adjustment portion 242 to change the protruding distance of the edge restraining member 230 relative to the mounting surface 211.

The adjustment portion 242 may be, but is not limited to, a common driving structure such as a motor or other mechanical limiting structures.

In some embodiments, the tab flattening structure 200 further includes an elastic member 250. The elastic member 250 is provided on the connecting portion 241, and one end is connected to the edge restraining member 230. The elastic member 250 is capable of applying a pressing restraint force through the edge restraining member 230.

Specifically, when the restraint surface 231 shapes and restrains the edge end portion 251 of the tab 25, a certain rigid pressure is applied on the tab 25. If the restraint on the tab 25 is excessive, the phenomenon of material detachment and lithium precipitation is likely to occur. Based on this, the present application is also provided with an elastic member 250. The elastic member 250 is capable of applying an elastic restraint force to the tab 25 through the edge restraining member 230, thereby alleviating the phenomenon of material detachment and lithium precipitation of the electrode assembly 23 caused by excessive rigid pressure.

One end of the elastic member 250 is connected to the connecting portion 241, and the other end may be connected to the hole wall of the mounting hole 212 or the adjustment portion 242. When the elastic member 250 is compressed, it releases an elastic restraint force toward the end where the connecting portion 241 is connected to the edge restraining member 230, so that the edge restraining member 230 applies an elastic restraint force to the tab 25 through the restraint surface 231.

It can be understood that the provision of the elastic member 250 avoids the direct rigid contact between the edge restraining member 230 and the edge end portion 251 of the tab 25, thereby protecting the tab 25 to a certain extent. In this case, elastic members 250 with different elastic moduli can be selected according to requirements to provide elastic restraint forces having different magnitudes to adapt to tabs 25 having different strengths.

The specific configuration of the elastic member 250 is not limited, with an objective to achieve elastic abutment between the edge restraining member 230 and the tab 25.

In some embodiments, the connecting portion 241 includes a first connecting section 2411 and a second connecting section 2412 that are connected to each other. The other end of the first connecting section 2411 is connected to the edge restraining member 230. One end of the second connecting section 2412 partially extends out of the mounting hole 212. The adjustment portion 242 is detachably sleeved on a portion of the second connecting section 2412 that extends out of the mounting hole 212 and is capable of abutting against the side of the mounting main body 210 facing away from the mounting surface 211. The elastic member 250 is sleeved on an outer periphery of the second connecting section 2412, and two ends respectively abut against the first connecting section 2411 and the inner wall of the mounting hole 212.

The two ends of the first connecting section 2411 are respectively connected to the edge restraining member 230 and the second connecting section 2412. One end of the second connecting section 2412 is connected to the first connecting section 2411, and the other end passes out of the mounting hole 212 from the side away from the mounting surface 211 and is detachably matched with the adjustment portion 242. When it is necessary to change the protruding distance of the edge restraining member 230 relative to the mounting surface 211, the adjustment portion 242 is removed from the second connecting section 2412, and after changing the axial position of the connecting portion 241 within the mounting hole 212, the adjustment portion 242 is assembled onto the connecting portion 241 and abuts against the side of the mounting main body 210 facing away from the mounting surface 211, thereby fixing the position of the connecting portion 241.

The outer diameters of the first connecting section 2411 and the second connecting section 2412 are different, and the outer diameter of the first connecting section 2411 is greater than the outer diameter of the second connecting section 2412. When the first connecting section 2411 and the second connecting section 2412 are cylindrical, this means that the diameter of the first connecting section 2411 is greater than the diameter of the second connecting section 2412. At the connecting portion 241, the first connecting section 2411 forms a step surface facing the second connecting section 2412.

When the connecting portion 241 is installed in the mounting hole 212, since the outer diameter of the second connecting section 2412 is relatively small, when the first connecting section 2411 abuts against the hole wall of the mounting hole 212, a gap exists between the second connecting section 2412 and the hole wall of the mounting hole 212. The elastic member 250 is sleeved on the second connecting section 2412 and is located in the gap, with one end connected to the step surface of the first connecting section 2411 and the other end abutting against the inner wall of the mounting hole 212 facing the step surface, so that the elastic member 250 generates an elastic restraint force along an axis of the mounting hole 212.

In some embodiments, the adjustment portion 242 is sleeved on the second connecting section 2412 and is threadedly and detachably connected to the second connecting section 2412.

The outer periphery of the second connecting section 2412 is machined with external threads, and the interior of the adjustment portion 242 is machined with internal threads. Through the cooperation of the internal and external threads, the adjustment portion 242 and the second connecting section 2412 can form a bolt-nut mating structure. The adjustment portion 242 is sleeved on the portion of the second connecting section 2412 that extends out of the mounting hole 212 from the side of the mounting main body 210 facing away from the mounting surface 211 and abuts against the side of the mounting main body 210 facing away from the mounting surface 211 to limit the position of the connecting portion 241.

It can be understood that as the axial position of the connecting portion 241 within the mounting hole 212 changes, the length of the portion of the second connecting section 2412 extending from the side of the mounting main body 210 facing away from the mounting surface 211 also changes.

In this way, the threaded connection conveniently achieves the position adjustment of the connecting portion 241 within the mounting hole 212 of the mounting main body 210.

In some embodiments, a plurality of edge restraining members 230 are provided, and the plurality of edge restraining members 230 are evenly arranged at intervals along a circumferential direction on the outer periphery of the flattening head 220.

It can be understood that each edge restraining member 230 corresponds to one adjustment member 240, one mounting hole 212, and one elastic member 250, so that the position of each edge restraining member 230 can be adjusted. Each edge restraining member 230 can protrude relative to the mounting surface 211 to restrain the edge end portion 251 of the tab 25.

When the flattening head 220 rotates to flatten a plurality of tabs 25, the plurality of edge restraining members 230 sequentially restrain and shape the edge end portions 251 of the plurality of tabs 25, thereby achieving a uniform constricting effect.

Generally, three to six edge restraining members 230 may be set. In other embodiments, other quantities can also be set. This is not limited in the present application.

In some embodiments, only one edge restraining member 230 may be provided, and the entire edge restraining member 230 is annularly disposed on outer periphery of the flattening head 220 and can protrude as a whole relative to the mounting surface 211. In the present application, a plurality of edge restraining members 230 are provided, which enables individual control of each one while also facilitating processing.

In some embodiments, the restraint surface 231 is arcuate, and the edge restraining member 230 is rotatable relative to the mounting main body 210.

The edge restraining member 230 may be spherical or cylindrical with a spherical end. During the process in which the flattening head 220 flattens the tab 25, the edge restraining member 230 can rotate relative to the connecting portion 241, so that the arcuate restraint surface 231 rotates relative to the mounting main body 210 and the tab 25, thereby reducing the risk of generating metal particles on the tab 25 during the flattening process by means of rolling.

Specifically, the rotational connection method between the edge restraining member 230 and the second connecting section 2412 is not limited. For example, the edge restraining member 230 can be directly set to a spherical ball, a rolling groove is provided at the end of the second connecting section 2412, and the spherical edge restraining member 230 is directly rolled and disposed in the rolling groove and can roll freely along the circumferential direction. In this case, the entire outer surface of the edge restraining member 230 can form the restraint surface 231.

In some embodiments, the flattening surface 221 is conical.

The conical tip of the flattening surface 221 is located on the side away from the mounting surface 211, and the side with the largest diameter is connected to the mounting surface 211, thereby forming the entire conical flattening head 220. As the flattening head 220 rotates, the conical flattening surface 221 rolls and flattens the tab 25.

It can be understood that the edge restraining member 230 is located on one side of the mounting surface 211 and is disposed close to the side with the largest diameter of the flattening head 220. A tip of the flattening head 220 is disposed close to a geometric center of the end surface 24 of the electrode assembly 23, so that the flattening head 220 completes the flattening of all tabs 25 after one rotation relative to the end surface 24.

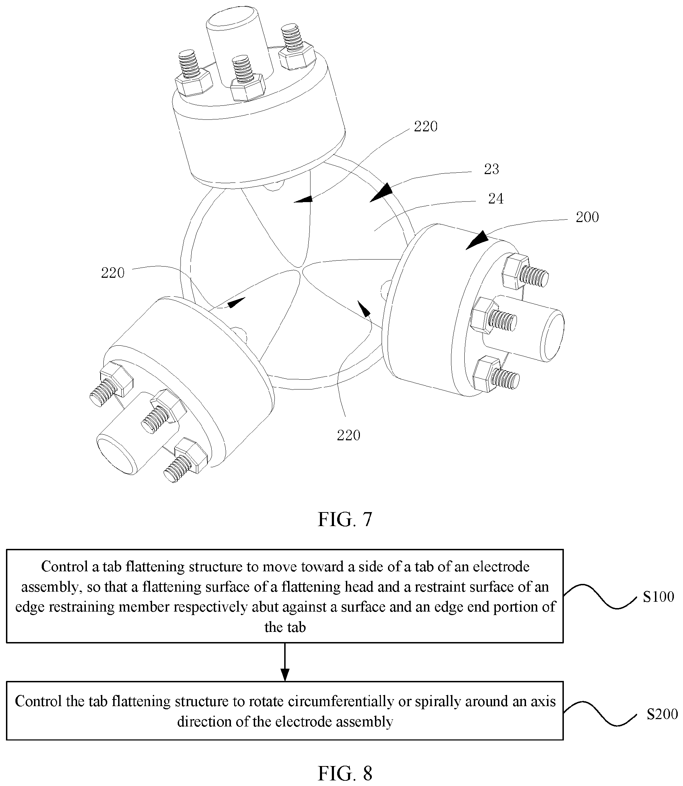

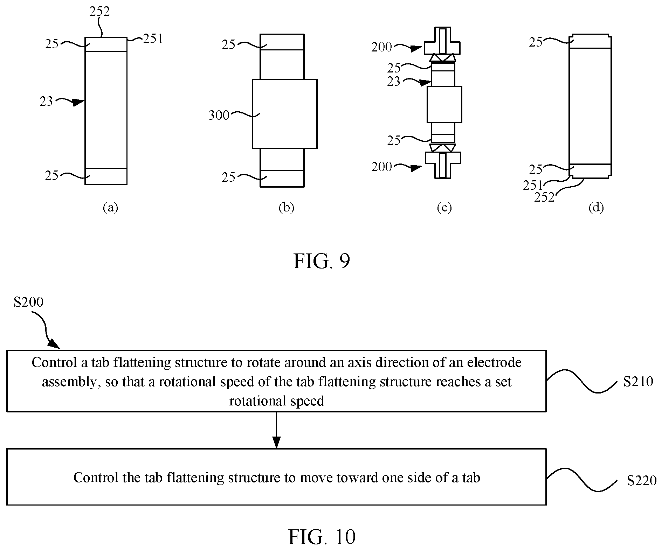

According to some embodiments of the present application, please refer to FIG. 8 and (a) to (d) in FIG. 9, the present application provides a tab flattening control method, adopting the tab flattening apparatus in the above embodiments. The method includes the following steps:

S100. Control a tab flattening structure 200 to move toward a side of a tab 25 of an electrode assembly 23, so that a flattening surface 221 of a flattening head 220 and a restraint surface 231 of an edge restraining member 230 respectively abut against a surface 252 and an edge end portion 251 of the tab.

S200. Control the tab flattening structure 200 to rotate circumferentially or spirally around an axis direction of the electrode assembly 23.

In step S100, controlling the tab flattening structure 200 to move toward one side of the tab 25 can be achieved in various manners, for example: using a device with telescopic functions such as an air cylinder, a hydraulic cylinder, or an oil cylinder to drive the tab flattening structure 200 to move uniformly toward the tab 25; alternatively, a motor and a transmission mechanism can also be used to achieve the movement of the tab flattening structure 200, such as a motor and lead screw slider combination structure, a combination of a motor and gears and racks, or the like.

Before flattening, it is necessary to abut the flattening surface 221 and the restraint surface 231 against the surface 252 and the edge end portion 251 of the tab respectively. This enables the flattening of the tab 25 while also restraining the edge of the tab 25. The abutment of the flattening surface 221 and the restraint surface 231 can be achieved in various manners, for example, before the restraint surface 231 abuts against the edge end portion 251, the axial position of the connecting portion 241 within the mounting hole 212 can be adjusted through the adjustment portion 242 to change the protruding distance of the edge restraining member 230 relative to the mounting surface 211, so that while the flattening surface 221 abuts against the surface 252 of the tab, it can also abut against the edge end portion 251. When the elastic member is provided on the connecting portion 241 and one end is connected to the edge restraining member 230, the abutment force of the restraint surface 231 on the edge end portion 251 of the tab 25 can also be adjusted through the adjustment portion 242. For example, when the protruding distance of the edge restraining member 230 relative to the mounting surface 211 is increased, if the restraint surface 231 abuts against the edge end portion 251 of the tab 25, the compression amount of the elastic member can be increased, thereby increasing the abutment force of the restraint surface 231 on the edge end portion 251.

In addition, in step S100, the middle portion of the electrode assembly 23 can be fixed by a fixing fixture 300 to facilitate stable flattening. To accelerate the flattening efficiency, the tab flattening structures 200 may be provided on both the upper and lower sides of the electrode assembly 23 to simultaneously flatten the upper and lower tabs 25.

In step S200, during the flattening process, the tab flattening structure 200 can be driven to make a circumferential movement around the axis of the electrode assembly 23; and the tab flattening structure 200 can also be driven to make a circumferential movement while feeding toward one side of the tab 25, forming a spiral rotation. Certainly, the flattening head 220 can also rotate around the axis thereof.

With such a design, the edge end portion 251 of the tab 25 can be restrained while the tab 25 is flattened, and the flattened tab 25 is limited within a safe range, which reduces the possibility of flashed burrs of the tab coming into electrical contact with other parts of the battery 100, thereby improving the reliability of the battery 100.

According to some embodiments of the present application, please refer to FIG. 10, S200 of controlling the tab flattening structure 200 to rotate circumferentially or spirally around the axis direction of the electrode assembly 23, includes:

S210. Control the tab flattening structure 200 to rotate around the axis direction of the electrode assembly 23, so that a rotational speed of the tab flattening structure 200 reaches a set rotational speed.

S220. Control the tab flattening structure 200 to move toward one side of the tab 25.

In step S210, the set rotational speed refers to a certain rotational speed value that the tab flattening structure 200 needs to reach to achieve the flattening effect. The rotational speed value may be set according to the actual material of the tab 25 and the flattening process.

In step S220, after the condition of reaching the set rotational speed is met, the tab flattening structure 200 can be controlled to feed toward the electrode assembly 23, so that the tab 25 is pressed down by a certain amount. In some embodiments, after the tab 25 is flattened, the edge end portion 251 of the tab 25 is lower than the surface 252 of the tab, and a step structure is formed between the two. For example, the edge end portion 251 of the tab 25 is 1 millimeter (mm) to 2 mm lower than the surface of the tab.

With such a design, by reasonably controlling the action of the tab flattening structure 200, the flattening of the tab 25 becomes more stable and the flattening effect is better.

According to some embodiments of the present application, the present application provides a battery production system, where the battery production system includes the tab flattening apparatus according to any one of the above items.

According to some embodiments of the present application, referring to FIG. 4 to FIG. 7, the present application provides a tab flattening apparatus. The tab flattening apparatus includes a driving member and a tab flattening structure 200. The tab flattening structure 200 includes a mounting main body 210, a flattening head 220, and an edge restraining member 230. The mounting main body 210 has a mounting surface 211. The flattening head 220 forms a conical flattening surface 221. A plurality of edge restraining members 230 are provided and arranged circumferentially around an outer periphery of the flattening head 220. The tab flattening structure 200 as a whole can rotate circumferentially, and the flattening head 220 can rotate circumferentially relative to the mounting main body 210, thereby flattening the tabs on an end surface 24 side of the electrode assembly 23 while using the restraint surface 231 of the edge restraining member 230 protruding from the mounting surface 211 to restrain and limit the edge end portion 251 of the tab 25, reducing the possibility of flashed burrs of the tab coming into electrical contact with other parts of the battery 100.

An adjustment member 240 and an elastic member 250 are also provided at the same time. The adjustment member 240 adjusts the distance by which the edge restraining member 230 protrudes relative to the mounting surface 211. In addition, the elastic member 250 applies an elastic restraint force to the tab 25 through the edge restraining member 230. Thus, this alleviates the phenomenon of material detachment and lithium precipitation of the electrode assembly 23 caused by excessive rigid pressure.

In conclusion, it should be noted that the foregoing embodiments are merely for describing the technical solutions of the present application rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A tab flattening apparatus, comprising:
a driving member; and
a tab flattening structure, driven by the driving member and rotating circumferentially or spirally around an axis direction of an electrode assembly, and comprising:
a mounting main body;
a flattening head, arranged on the mounting main body and protruding from one side of the mounting main body, and an outer surface of the flattening head forming a flattening surface capable of contacting a surface of the tab; and
an edge restraining member, arranged on an outer periphery of the flattening head, protruding from one side of the mounting main body, and forming a restraint surface capable of contacting an edge end portion of the tab.

2. The tab flattening apparatus according to claim 1, wherein the mounting main body has a mounting surface, and both the flattening head and the edge restraining member protrude relative to the mounting surface; and
the tab flattening structure further comprises an adjustment member, wherein the adjustment member is connected to the edge restraining member and is configured to adjust a protruding distance of the edge restraining member relative to the mounting surface.

3. The tab flattening apparatus according to claim 2, wherein the mounting main body has a mounting hole communicating with the mounting surface, the adjustment member comprises a connecting portion and an adjustment portion, the connecting portion is passed through the mounting hole and is connected to the edge restraining member on one side of the mounting surface, and the adjustment portion is provided on a side of the connecting portion away from the edge restraining member; and
the adjustment portion is configured to adjust an axial position of the connecting portion within the mounting hole.

4. The tab flattening apparatus according to claim 3, wherein the connecting portion is passed through the mounting hole and forms, along an axis direction of the mounting hole, a first connecting end close to the mounting surface and a second connecting end away from the mounting surface, the edge restraining member is provided at the first connecting end, and the adjustment member is provided at the second connecting end.

5. The tab flattening apparatus according to claim 3 or 4, wherein the mounting hole penetrates the mounting main body along an extending direction of the flattening head.

6. The tab flattening apparatus according to any one of claims 3 to 5, wherein the tab flattening structure further comprises an elastic member, one end of the elastic member is connected to the connecting portion, and the elastic member is capable of applying an elastic restraint force to the tab through the edge restraining member.

7. The tab flattening apparatus according to claim 6, wherein the connecting portion comprises a first connecting section and a second connecting section that are connected to each other;
the other end of the first connecting section is connected to the edge restraining member, one end of the second connecting section partially extends out of the mounting hole, and the adjustment portion is detachably sleeved on a portion of the second connecting section that extends out of the mounting hole and is capable of abutting against a side of the mounting main body facing away from the mounting surface; and
the elastic member is sleeved on an outer periphery of the second connecting section, and two ends respectively abut against the first connecting section and an inner wall of the mounting hole.

8. The tab flattening apparatus according to claim 7, wherein the first connecting section and the second connecting section are both cylindrical, and a diameter of the first connecting section is larger than a diameter of the second connecting section.

9. The tab flattening apparatus according to claim 7 or 8, wherein the adjustment portion is sleeved on the second connecting section and is threadedly and detachably connected to the second connecting section.

10. The tab flattening apparatus according to any one of claims 7 to 9, wherein the adjustment portion is sleeved, from a side of the mounting main body facing away from the mounting surface, on the portion of the second connecting section that extends out of the mounting hole, and abuts against the side of the mounting main body facing away from the mounting surface to limit a position of the connecting portion.

11. The tab flattening apparatus according to any one of claims 1 to 10, wherein a plurality of edge restraining members are provided, and the plurality of edge restraining members are evenly arranged at intervals along a circumferential direction on an outer periphery of the flattening head.

12. The tab flattening apparatus according to any one of claims 2 to 10, wherein one edge restraining member is provided, and the edge restraining member is annularly disposed on the outer periphery of the flattening head and protrudes relative to the mounting surface.

13. The tab flattening apparatus according to any one of claims 1 to 12, wherein the restraint surface is arcuate, and the edge restraining member is rotatable relative to the mounting main body.

14. The tab flattening apparatus according to claim 13, wherein the edge restraining member is spherical or cylindrical with a spherical end.

15. The tab flattening apparatus according to any one of claims 1 to 14, wherein the flattening surface is conical.

16. The tab flattening apparatus according to any one of claims 2 to 15, wherein the flattening surface is conical, a conical tip of the flattening surface is located on a side away from the mounting surface, and a side with a largest diameter is connected to the mounting surface.

17. A tab flattening control method, adopting the tab flattening apparatus according to any one of claims 1 to 16, the method comprising the following steps:
controlling a tab flattening structure to move toward a side of a tab of an electrode assembly, so that a flattening surface of a flattening head and a restraint surface of an edge restraining member respectively abut against a surface and an edge end portion of the tab; and
controlling the tab flattening structure to rotate circumferentially or spirally around an axis direction of the electrode assembly.

18. The tab flattening control method according to claim 17, further comprising, before the method: abutting the flattening surface and the restraint surface against the surface and the edge end portion of the tab, respectively.

19. The tab flattening control method according to claim 17 or 18, wherein the step of controlling the tab flattening structure to rotate circumferentially or spirally around an axis direction of the electrode assembly comprises:
controlling the tab flattening structure to rotate around the axis direction of the electrode assembly, so that a rotational speed of the tab flattening structure reaches a set rotational speed; and
controlling the tab flattening structure to move toward one side of the tab.

20. A battery production system, wherein the battery production system comprises the tab flattening apparatus according to any one of claims 1 to 16.
